# EUROPEAN PATENT APPLICATION

(11) **EP 0 979 604 A1**
(43) Date of publication of application: **16.02.2000**
(21) Application number: 99202625.2
(22) Date of filing: 11.08.1999
(51) Int. Cl.: A01K 1/00

(54) **Cubicle partition**

(30) Priority: 13.08.1998 NL 1009861; 06.11.1998 NL 1010497
(71) Applicant: DE BOER STALINRICHTINGEN B.V., NL-8938 AD Leeuwarden (NL)
(72) Inventor: Doornbosch, Jan Jaap, 9254 AJ Hardegarijp (NL); Hoekstra, Hains, 9084 DD Goutum (NL); Roorda, Age Dirk, 9089 BK Wytgaard (NL)
(74) Representative: 't Jong, Bastiaan Jacobus

(57) **Abstract**

The present invention relates to a fence (1) which comprises a cubicle partition (7) in the situation mounted on a support construction (2), wherein the fence comprises an additional fence part (6,12) which extends from the cubicle partition close to the side of the fence directed toward the support construction in the mounted situation. The invention also relates to an assembly of a support construction (2) and at least one fence comprising a cubicle partition.

## Description

The present invention relates to a fence which comprises a cubicle partition in the situation mounted on a support construction. Such a fence, mountable on the support construction, is support-free in that the fence itself has no foot or leg for placing on the stall floor.

Such fences are known alia from EP-A-0322970, wherein they are for instance two-dimensional and extend transversely of the support construction in the situation mounted thereon, wherein the fence has for instance substantially a U-shape and the support construction is formed by parallel beams at differing height one above the other to which the legs of the U-shaped fence are fixed by means of for instance a coupling, a weld etc.

The known fences forming cubicle partitions have the drawback that other usual provisions in cubicles have to be arranged separately on the fence and/or the beams, which entails large numbers of fastenings and/or couplings having to be used. One particular additional usual provision in the known fences are shoulder beams. Using shoulder beams it is possible to ensure that cows entering a cubicle walk up against these and will then as a matter of course lie down and not walk too far into the cubicle. Tube-like brisket boards serve a similar function, wherein the cows taking up position in the cubicles cannot lie down in the cubicle with the legs straightened too far forward. Both the provisions of shoulder beam and tube-like brisket board therefore serve to ensure that the cows do not come to lie too far into the cubicle, wherein the cows could foul the surface in the cubicles with their own excrement.

The shoulder beams are therefore separate tube constructions which must be arranged at shoulder height on the fences forming cubicle partitions using couplings and the like, while the tube-like brisket boards are also additional tube constructions which also have to be arranged separately on the fence at little height above the stall floor by means of a coupling or the like. Many separate couplings and tube constructions are therefore required for the shoulder beams and tube-like brisket boards, which makes assembly complex and costs high.

In order to make or retain the fold-away form of the fences known from EP-A-0322970, the shoulder beams herein do not run over a number of fences, but form an additional separate tube, beam or the like which is to be arranged on a completely independent cubicle partition and which does not then extend as far as the neighbouring cubicle partition but runs back to the support construction. At least three couplings are thus required for mounting of the fence and the fence part and material consumption is high, whereby cost and complexity are also high.

The present invention has for its object to remedy the above stated drawbacks and for this purpose a fence forming a cubicle partition is provided which is distinguished in that the fence comprises an additional fence part which extends from the cubicle partition close to the side of the fence directed toward the support construction in the mounted situation, wherein the fence and the fence part form a unit.

This fence part extending from the cubicle partition forms in very simple manner the constructions required for the other usual provisions in a cubicle. Assembly is hereby simplified due to smaller numbers of individual components and the cost of couplings and other provisions relating to tube constructions is considerably reduced.

The cubicle partition and the fence part are preferably formed from a single tube. Since cubicle partitions with a substantially two-dimensional form are already formed, in particular bent, from tubes, it is a very favourable development in terms of the production of such fences to form from a single tube both the cubicle partition and the fence part providing the additional provisions. Only a slight modification of the existing production means is then necessary for this purpose.

In a preferred embodiment the fence and the support construction can form a unit. This is then a favourable alternative to variants wherein a coupling must be used to arrange the fence on the support construction.

Alternatively or additionally, the fence comprises on the side directed toward the support construction in the mounted situation a hinge coupling with which the fence is pivotable up and downward on the support construction on a horizontal axis. This is particularly advantageous when the form of the cubicle partition is such that a cow can become trapped between the cubicle partition and the stall floor. The animal can be rescued by pivoting the fence upward, optionally after rendering a lock inoperative.

Also a favourable embodiment is that the fence comprises on the side directed toward the support construction in the mounted situation a coupling piece variable in length with which the dimension of the fence is adjustable relative to the support construction. A precise setting is hereby possible subject to the type of livestock making use of the cubicles and particularly the size thereof, wherein the other usual provisions such as shoulder beam and brisket board are adapted thereto.

In a favourable embodiment both ends of the fence are directed in the mounted situation toward the support construction. This is also the case in substantially two-dimensional cubicle partitions so that the present fences comprising cubicle partitions can replace the known cubicle partitions in simple manner without material, such as a second beam, herein being left over and having to be written off.

The present invention further relates to an assembly of a support construction and at least one fence comprising a cubicle partition and a stall for livestock having a part of the stall surface area divided into cubicles with at least one such assembly.

The present invention will be further elucidated on the basis of the figure description which is formulated with reference to the annexed figures, in which:
fig. 1 shows a perspective view of a first embodiment of a fence according to the present invention;
fig. 2 is a perspective view of an alternative embodiment of a fence according to the present invention;
fig. 3 is a perspective view of a second alternative embodiment of a fence according to the present invention;
fig. 4 shows a third alternative embodiment of a fence according to the present invention;
fig. 5 shows a fourth alternative embodiment of a fence according to the present invention;
fig. 6 shows a fifth alternative embodiment of a fence according to the present invention;
fig. 7 shows a sixth alternative embodiment of a fence according to the present invention;
fig. 8 shows a seventh alternative embodiment of a fence according to the present invention;
fig. 9 is a perspective view of an eighth alternative embodiment of a fence according to the present invention;
fig. 10 shows a perspective exploded view of a component of the fence shown in fig. 9; and
fig. 11 shows a perspective view of another component (other than fig. 10) of the fence shown in fig. 9.

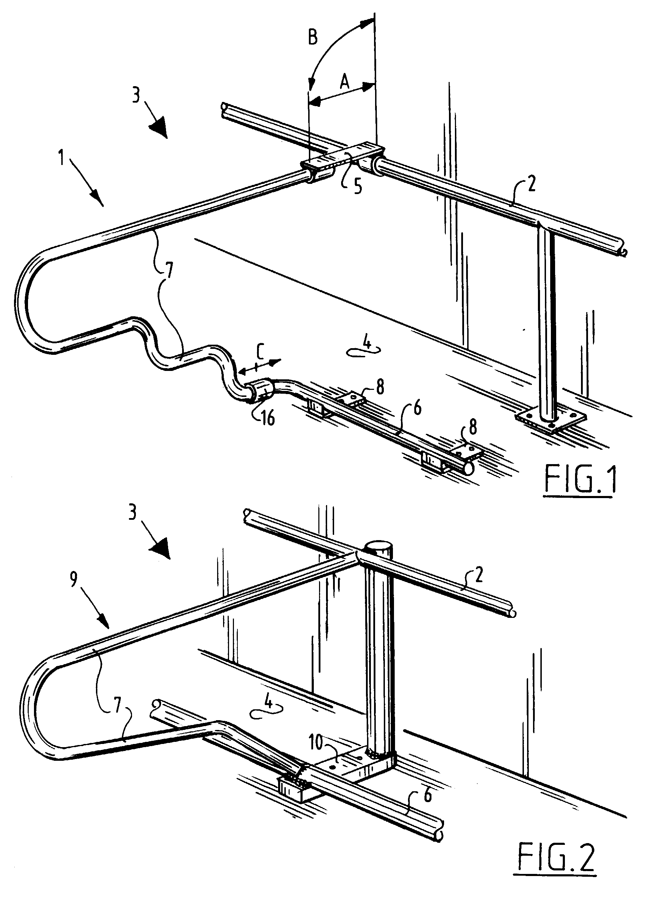

Corresponding components are designated in the figures with the same reference numerals. Fig. 1 shows a part of a stall where one of two partitions required for a cubicle 3 is formed by means of a fence 1. Stall floor 4 is sub-divided by these fences 1 into cubicles 3 in which the animals, in particular cows, can take up position to ruminate or rest.

Fence 1 comprises a tube-like brisket board 6 and a cubicle partition 7. Fence 1 is connected by means of a coupling 5 to a support construction comprising a single beam 2. Coupling 5 is length-adjustable in the direction indicated with arrow A so that the extent to which fence 1 extends from beam 2 is also adjustable. Also adjustable herewith therefore is the distance between the support construction with beam 2 and the tube-like brisket board 6, so that account can hereby be taken of the size of the animals which have to take up position in the cubicle, in particular the type of cow. The adjustment range of coupling 5 can however be limited to for instance only 10 cm but may also amount to 20 cm, 30 cm or more. In order to provide a further sufficient adjustability for the type of cow, and in particular the size thereof, an extension piece 16 is arranged additionally or alternatively in the embodiment shown here between tube-like brisket board 6 and cubicle partition 7 so as to be able to determine, in accordance with the type of livestock, the mutual positioning and therefore the exact location of tube-like brisket board 6 in the cubicle in the direction of arrow C. Extension piece 16 is chosen from a series of separate lengths, but can alternatively be designed as a single element variable in length comprising for instance a screw spindle. Extension piece 16 can also form a unit with tube-like brisket board 6, wherein the extension piece then has for instance a larger inner diameter as a whole than the outer diameter of cubicle partition 7 and is slidable over the end of cubicle partition 7 opposite beam 2 for fixing thereof.

Tube-like brisket board 6 is here coupled with clamps 8 to stall floor 4 and is releasable as such from stall floor 4. Coupling 5 likewise comprises a hinge with which fence 1 is pivotable up and downward in the direction of arrow B relative to beam 2. when an animal such as a cow becomes trapped under the part of fence 1 forming cubicle partition 7, the animal can be released in simple manner by disconnecting tube-like brisket board 6 from stall floor 4 and pivoting the whole fence 1 upward in the direction of arrow B by means of the pivot function of coupling 5.

Tube-like brisket board 6 ensures that the animals cannot take up position so close to beam 2 with straightened legs that cubicle 3 can become fouled by the animals' own excrement.

An alternative fence 9 is applied in the embodiment shown in fig. 2. The part forming the cubicle partition 7 thereof is mounted fixedly, for instance by means of welding, to both beam 2 and tube-like brisket board 6, which in turn is fixed to a foot 10 for the support construction with beam 2, also for instance by means of welding. This is therefore a considerably simplified embodiment in respect of the absence of the adjustment options provided by the coupling 5 shown in fig. 1, wherein use is made of a continuous tube-like brisket board 6.

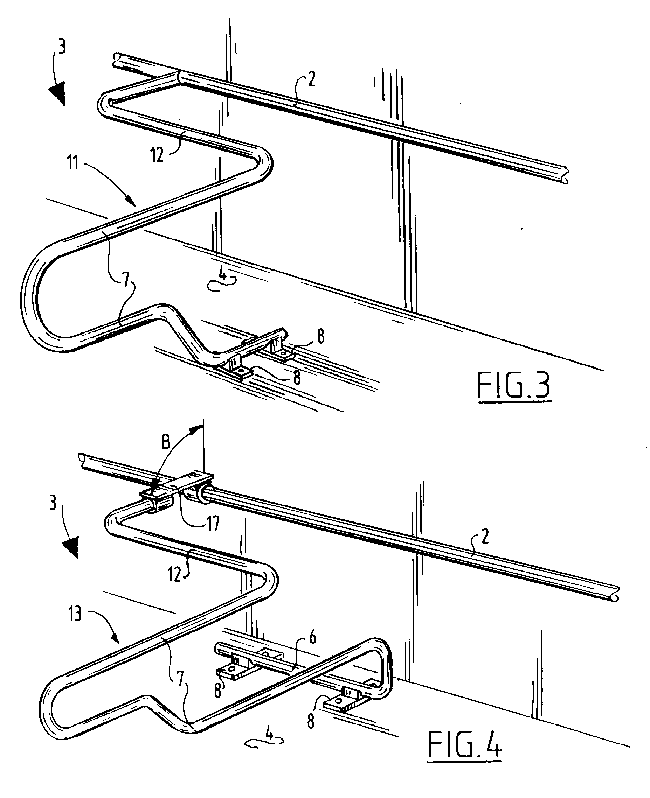

Fig. 3 shows yet another embodiment of a fence 11 according to the present invention, wherein the fence part extending from cubicle partition 7 forms a shoulder beam 12. Just as the tube-like brisket board 6 in the embodiments shown in fig. 1 and 2, shoulder beam 10 extends from the part of fence 11 forming cubicle partition 7 to the side close to beam 2. When animals enter cubicle 3, they strike with their shoulders against shoulder beam 12 and will as a matter of course lie down at the thereby defined position. This prevents the animals walking through too far into the cubicle, wherein they would foul the surface with their excreta. The other end of the fence 11 is once again fixed with clamps 8 to stall floor 4, although not releasably here, since the pivot function relative to beam 2 shown in fig. 1 is omitted. The outer end of fence 11 on the side of shoulder beam 12 is here also fixed to beam 2, for instance with a weld.

In an embodiment (not shown) a further connection is arranged to enhance stability between beam 2 and shoulder beam 12, where the connection engages the shoulder beam somewhere along the length thereof, preferably as closely as possible to the bend between cubicle partition 7 and shoulder beam 12.

Fig. 4 shows a fence 13 in which both provisions of a tube-like brisket board 6 and a shoulder beam 12 are present. In the fence 13 shown here tube-like brisket board 6 and shoulder beam 12 extend in the same direction relative to the part of fence 13 forming cubicle partition 7. Here also clamps 8 are arranged on stall floor 4 to engage on tube-like brisket board 6. Fence 13 is further connected to beam 2 by means of a coupling once again pivotable in the direction of arrow B (see fig. 1). Clamps 8 can be designed here as snap-on clamps so that they will release the tube-like brisket board if a cow were to set its shoulders under shoulder beam 12, wherein fence 13 will be able to rotate as a whole on the beam via pivot coupling 17. Tube-like brisket board 6 will herein move forward (as seen from the entrance to cubicle 3), so that the cow will hereby be pushed back. Shoulder beam 12 and tube-like brisket board 6 therefore reinforce each other functionally. A stabilizing additional connection can here also be arranged between beam 2 and shoulder beam 12, as described with reference to fig. 3, wherein the same type of pivot coupling as reference numeral 17 is then applied.

In an embodiment (not shown) in which not a pivot coupling 17 but a fixed connection such as a weld or a fixed coupling is used to arrange the free end of shoulder beam 12 on beam 2, the free end of tube-like brisket board 6 further has a bend to a second beam (not shown) at a level lower than the shown beam 2. In this way both ends of fence 13 extend to the support construction which then consists of two different beams, while here in fig. 4 only one beam 2 is shown. The same option is possible for the embodiments of fig. 1 and 3. This avoids clamps 8 having to be arranged in the stall floor and the present fences can be arranged without problem on existing support constructions for substantially two-dimensional, U-shaped cubicle partitions without leaving material unused, so that optimum use is made of the existing support construction.

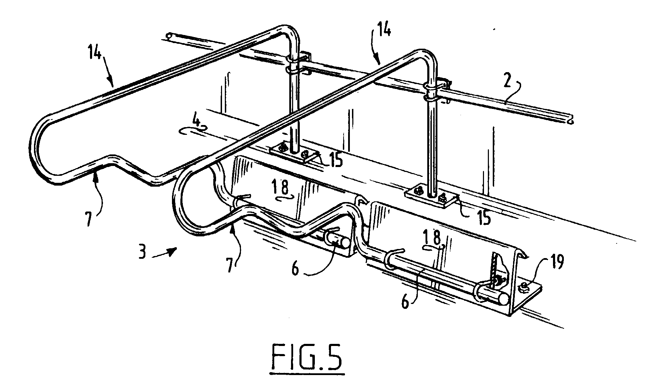

Fig. 5 shows two fences 14 between which a cubicle 3 is formed. On the side of the support construction with beam 2 fences 14 are fixed in stall floor 4 by means of anchors 15. Tube-like brisket boards 6 are further coupled to plates 18 which are in turn fixed onto stall floor 4 by means of bolts 19.

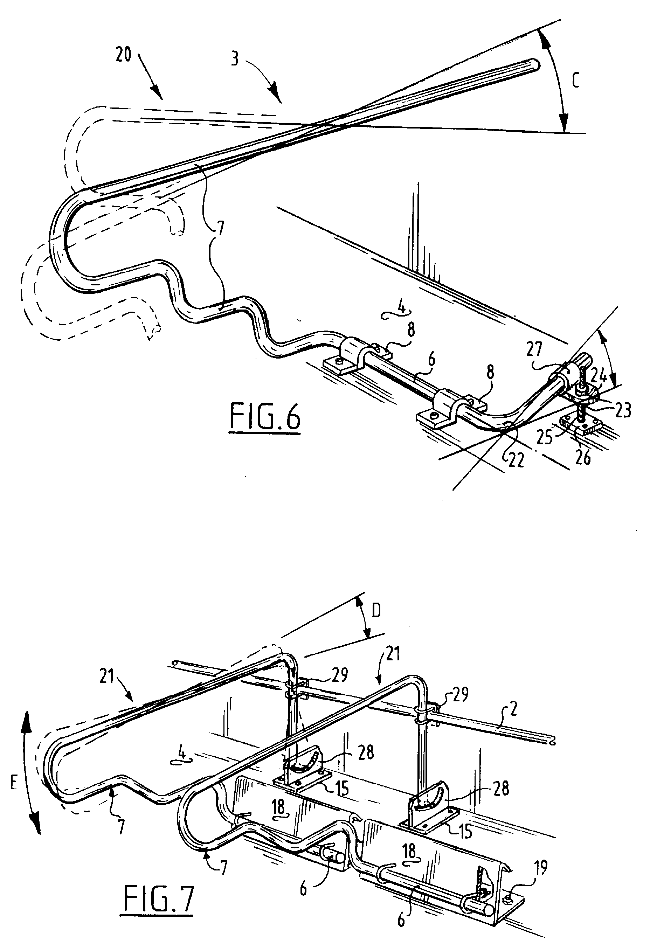

In fig. 6 and 7 are shown alternative embodiments of a fence according to the present invention, wherein adjusting means are connected to the cubicle partition to determine the position thereof in the mounted situation. The respective fences 20 in fig. 6 and 21 in fig. 7 correspond in terms of the form thereof with fence 1 in fig. 1 and fences 14 in fig. 5.

In contrast to the foregoing embodiments, no support construction is provided in fig. 6. On the other hand, tube-like brisket board 6 is curved into a bend 22 on the free end thereof and an adjustable fastening forming the adjusting means is arranged close to the free end of bend 22. The fastening consists of a foot-plate 26 fixed to floor 4 and having thereon an upward extending threaded end 25. This latter passes through flange 24 which is arranged for instance on a strap 27 on the free end of bend 22. Above and below flange 24 bolts 23 are screwed over threaded end 25.

In this configuration there is provided a tilt axis corresponding with tube-like brisket board 6. By adjusting bolts 23 along threaded end 25 the fence 20 tilts on this tilt axis, wherein the top part of the part of fence 20 forming cubicle partition 7 is adjustable as according to arrow C in fig. 6.

The embodiment shown in fig. 7 corresponds with that shown in fig. 5. Here however, it is the part of the fence forming cubicle partition 7 which is adjustable in respect of the position thereof. For this purpose the end located close to beam 2 of the part of fence 21 forming cubicle partition 7 is fixed substantially with clamps 29 to beam 2. The coupling of tube-like brisket boards 6 to plates 18 is stationary and forms a tilt axis which is adjustable during mounting. By tilting fence 21 forward or backward a desired position can be realized prior to tightening of couplings 29.

Anchors 15 are provided on the upper side with a conductor 28 engaging the end of the tube of fence 21. This makes possible the above described tilting movement while the free end of fence 21 close to beam 2 is safely protected.

The tilting movement is indicated schematically in fig. 7 with arrows D and E, wherein it can be seen clearly that a tilting movement or rotation movement along arrow E of the end of the part of fence 21 forming cubicle partition 7 and located at a distance from beam 2 is accompanied by variation of the position as according to arrow D.

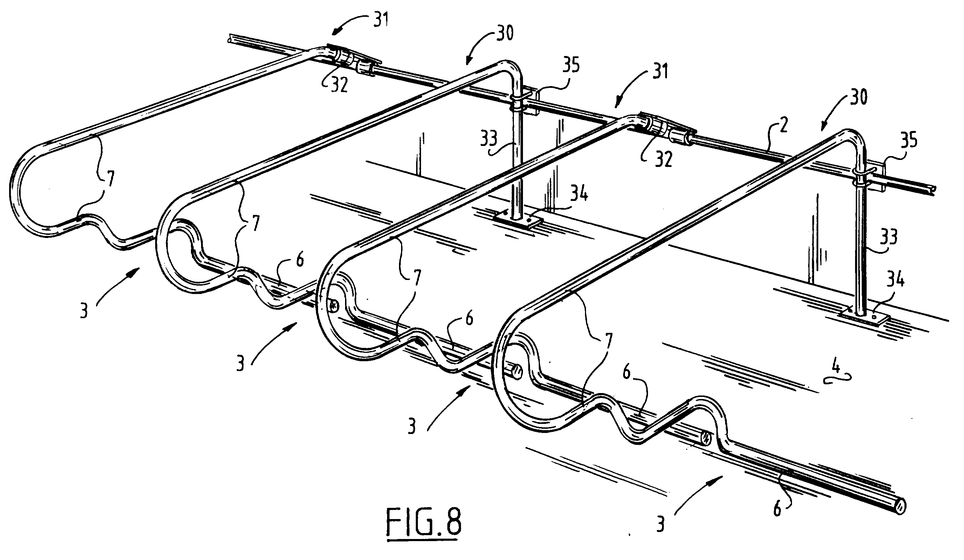

Fig. 8 further shows another embodiment of fences according to the present invention forming cubicle partitions. This is a combination of two types of fence 30, 31 which only differ in embodiment close to beam 2.

Fences 30 are herein provided with a post 33 mounted fixedly on stall floor 4 by means of a foot 34. Post 33, cubicle partition 7 and tube-like brisket board 6 are formed from a single tube. In the case of fences 31 she same applies for cubicle partition 7 and tube-like brisket board 6, but then without post 33.

Fences 30 stand fixedly on stall floor 4 as described above. Beam 2 is fixed with couplings 35 to posts 33 of fences 30 so that no other construction is required for beam 2. Between fences 30 the fences 31 are suspended from the beam by means of an adjustable coupling 32.

In the embodiment shown here fences 30 and 31 alternate, but it is equally possible for a plurality of fences 31 to be arranged between a pair of fences 30, or vice versa. The adjustability of coupling 32 can correspond with the adjustments discussed above in respect of fig. 1-7 or be any other random desired adjustment. Coupling 32 can for instance be adapted to enable upward pivoting of fences 31 in the position mounted on beam 2. Alternatively or additionally, the orientation or position of the part of fences 31 forming cubicle partitions 7 can be adjustable.

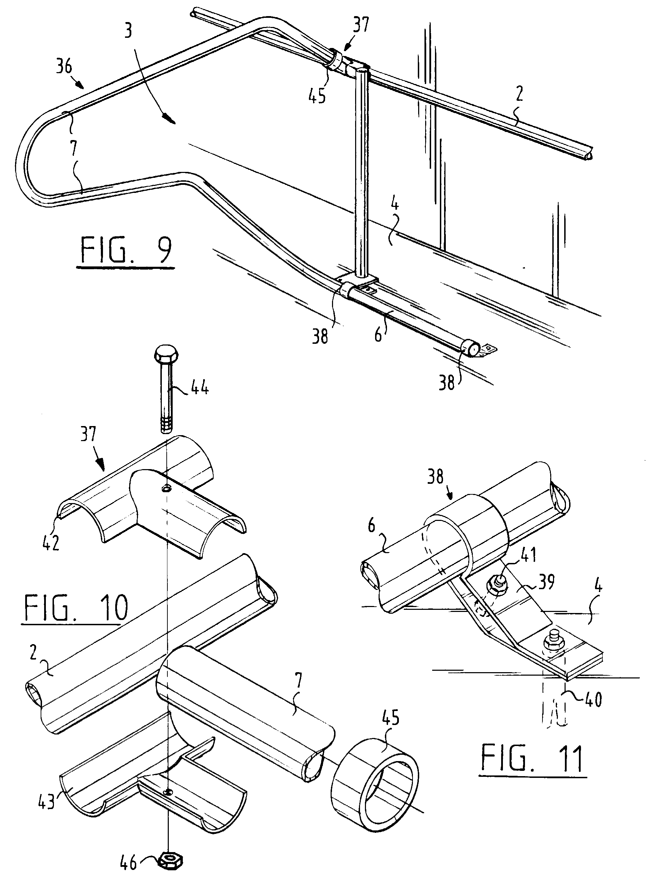

Fig. 9 shows an eighth alternative embodiment of a fence 36 according to the present invention. Fence 36 here also comprises a cubicle partition 7 as separation between cubicles 3. Fence 36 further comprises a tube-like brisket board 6 which is arranged on stall floor 4 with floor couplings 38. These floor couplings 38 are described below with reference to fig. 11.

Fence 36 further comprises a T-coupling 37 for fixing fence 36 to beam 2. T-coupling 37 is further described with reference to fig. 10.

Fig. 10 shows that T-coupling 37 consists of an upper part 42 and a lower part 43 which are both T-shaped. In the configuration shown here two legs of upper part 42 and lower part 43 of T-coupling 37 engage on upper beam 2, while the third leg of T-coupling 37 engages on the part of fence 36 forming cubicle partition 7. This is all shown in fig. 10 in perspective exploded view.

Assembly of T-coupling 37 of fig. 10 is simple and therefore quick to effect and also quick to adapt or adjust. Upper part 42 and lower part 43 of T-coupling 37 are placed in contact with upper beam 2, whereafter a bolt 44 is placed loosely through upper part 42 and lower part 43 to engage on a nut 46. The combination of bolt 44 and nut 46 is herein not yet fully tightened but forms a loose connection between upper part 42 and lower part 43 of T-coupling 37. With this loose connection the part of fence 36 forming cubicle partition 7 can be placed into the third free leg of T-coupling 37. Prior hereto a compression ring 45 is pushed over the part of fence 36 forming cubicle partition 7. After the part of fence 36 forming cubicle partition 7 has been placed in the free leg of T-coupling 37, the compression ring 45 is pushed during assembly of the T-coupling over the leg of T-coupling 37 in which has been placed the part of fence 36 forming cubicle partition 7.

T-coupling 37 is thus tightened uniformly using compression ring 45, whereby additional support is provided around T-coupling 37.

In an alternative embodiment (not shown) the combination of bolt 44 and nut 46 can be supplemented or replaced by additional compression rings 45 which are pushed over upper beam 2 and can be connected to T-coupling 37 to bring about tightening of T-coupling 37.

Fig. 11 shows the floor couplings 38 of fig. 9 in more detail.

Floor couplings 38 each comprise a bracket 39 which on one side is fixed in stall floor 4 using an anchoring bolt 40 and which on the other is placed under tension engaging on tube-like brisket board 6 using a clamping bolt 41. The fence 36 shown in fig. 9, and in particular the part thereof forming tube-like brisket board 6, can be adjusted to a very considerable extent. While floor coupling 38 remains stationary relative to the stall floor through releasing or loosening of clamping bolt 41, the part of fence 36 forming tube-like brisket board 6 can be pushed through floor coupling 38 and displaced in longitudinal direction of this tube-like brisket board part 6. T-coupling 37 of fig. 10 is also reliable and gives a good connection between fence 36 and beam 2, but by loosening the combination of clamping bolt 44 and the associated nut 46 can be readily displaced over beam 2 in longitudinal direction thereof in order to obtain a desired dimensioning, such as the dimensions of cubicle 3.

It will be apparent to a skilled person in the relevant art that many other embodiments are possible within the scope of the present invention as defined in the appended claims. Diverse types of coupling to the support construction other than described here are thus possible, other support constructions are also possible and it is particularly important that other provisions are realized in the fence in which the cubicle partition is formed, such as the tube-like brisket board and/or the shoulder beam and so on.

## Claims

1. Fence (1, 9, 11, 13, 14, 20, 21, 30, 31, 36) which comprises a cubicle partition (7) in the situation mounted on a support construction (2), wherein the fence comprises an additional fence part (6; 12) which extends from the cubicle partition close to the side of the fence (1) directed toward the support construction (2) in the mounted situation, wherein the fence and the fence part form a unit.

2. Fence as claimed in claim 1, wherein the fence part extends from the underside in the mounted situation and forms a brisket board (6).

3. Fence as claimed in claim 1, wherein the fence part extends from the top side in the mounted situation and forms a shoulder beam (12).

4. Fence as claimed in any of the foregoing claims, wherein the cubicle partition (7) and the fence part (6; 12) are formed from a single tube.

5. Fence as claimed in any of the foregoing claims, wherein the fence and the support construction (2) form a unit.

6. Fence as claimed in any of the foregoing claims, wherein the fence comprises on the side directed toward the support construction (2) in the mounted position a hinge coupling (5) with which the fence is pivotable up and downward on the support construction (2) on a horizontal axis.

7. Fence as claimed in any of the foregoing claims, wherein the fence comprises on the side directed toward the support construction (2) in the mounted position a coupling piece (5) variable in length with which the dimensions of the fence is adjustable relative to the support construction (2).

8. Fence as claimed in any of the foregoing claims, wherein both ends of the tube of the fence are directed in the mounted situation toward the support construction (2).

9. Fence as claimed in any of the foregoing claims, wherein an extension piece which itself may or may not be length-adjustable is arranged between the cubicle partition and the additional fence part.

10. Fence as claimed in one or more than one of the foregoing claims, wherein adjusting means are connected to the cubicle partition for determining the position thereof in the mounted situation.

11. Fence as claimed in claim 10, wherein the adjusting means comprise an extension piece.

12. Fence as claimed in claim 11, wherein the extension piece is arranged on the side of the cubicle partition (7) to be directed toward the support construction (2).

13. Fence as claimed in one or more than one of the foregoing claims, wherein between the cubicle partition (7) and the support construction (2) is arranged a coupling (37) which is adapted for releasable engagement on at least one of the cubicle partition (7) and the support construction (2), and is substantially releasable without losing engagement on the other.

14. Fence as claimed in claim 13, wherein the coupling is a T-coupling (37).

15. Fence as claimed in at least one of the foregoing claims, with a part such as a tube-like brisket board (6) fixable to a stall floor (4), for which purpose a floor coupling (38) is provided which can be fixed (40) in stationary manner to the stall floor (4) and releasably engages (41) said part.

16. Assembly of a support construction (2) and at least one fence comprising a cubicle partition (7) as claimed in one or more than one of the foregoing claims.

17. Stall for livestock having a part of the stall surface area divided into cubicles with at least one assembly as claimed in claim 16.
